# EUROPÄISCHE PATENTSCHRIFT

(11) **EP 1 089 864 B1**
(45) Veröffentlichungstag und Bekanntmachung des Hinweises auf die Patenterteilung: **31.07.2002**
(21) Anmeldenummer: 00922636.6
(22) Anmeldetag: 14.04.2000
(51) Int. Cl.: B29C 47/20

(54) **EXTRUSIONSKOPF**
EXTRUSION HEAD
TETE D'EXTRUDEUSE

(30) Priorität: 16.04.1999 DE 29906763 U
(43) Veröffentlichungstag der Anmeldung: 11.04.2001
(73) Patentinhaber: MAUSER-WERKE GmbH & Co. KG, 50321 Brühl (DE)
(72) Erfinder: LANGOS, Peter, D-53757 St. Augustin (DE); LEHMANN, Manfred, D-51143 Köln (DE); KEUSCH, Stefan, D-50321 Brühl (DE)
(86) Internationale Anmeldenummer: EP0003365
(87) Internationale Veröffentlichungsnummer: WO0063000

(56) Entgegenhaltungen:
- DE-A- 3 623 308
- DE-A- 4 117 083
- US-A- 3 023 461
- US-A- 4 038 017

## Beschreibung

Die vorliegende Erfindung bezieht sich auf einen Extrusionskopf für eine Blasformmaschine zur Herstellung von mehrschichtigen Kunststoff-Hohlkörpern mit einem oder mehreren an das Speicherkopfgehäuse angeschlossenen Extrudern zur Einspeisung von schmelzflüssiger Kunsttoff-Schmelze in den Speicherkopf, mit einer zentral angeordneten Pinole und wenigstens einem, die Pinole konzentrisch umschließenden Verteilerorgan zur Umfangsverteilung der Kunststoffschmeize(n) und Zuführung in einen ringförmigen Speicherraum, an den sich eine ringförmige Austrittsdüse anschließt, durch den die Kunststoff-Schmelze mittels eines axial verschiebbaren Ausstoßkolbens ausdrückbar ist.
Extrusionsköpfe (= Speicherköpfe oder Akkuköpfe) für Blasformmaschinen sind allgemein bekannt.
In der Druckschrift US 5,256,051 (Mauser) ist in Figur 1 ein Extrusionskopf mit zwei konzentrisch zueinander angeordneten Wendelkanalverteilerhülsen gezeigt. Der äußere Wendelkanalverteiler ist noch einmal durch eine weitere Zylinderhülse abgedeckt . Alle drei Hülsen bilden den Ausstoßkolben, welcher axial verschiebbar ausgebildet ist und das angesammelte Kunststoffmaterial durch die untere Ringdüse aus dem Speicherraum ausdrückt. Bei diesem Extrusionskopf werden die beiden Kunststoffströme in unvorteilhafter Weise noch auf vergleichsweise sehr unterschiedlich großen Durchmessern über den Umfang verteilt, was mit der zusätzlichen Abdeckhülse eine breite Bauart des Extrusionskopfes erfordert.

Es ist Aufgabe der vorliegenden Erfindung, einen neuartigen Extrusionskopf für eine Blasformmaschine zur Herstellung von zweischichtigen, insbesondere großvolumigen Kunststoff-Hohlkörpern anzugeben, bei dem nahezu gleiche rheologische Fließbedingungen für alle Kunststoff-Partikel bei der Zuführung und der Umfangsverteilung der unterschiedlichen schmelzflüssigen Kunststoffströme zu den Verteilerorganen und in den Verteilerorganen selbst gegeben sind, wobei gleichzeitig eine verbesserte Überlappung und Umfangsverteilung der Schmelzeströme im Verteilerorgan und eine störungsfreie Homogenisierung im Speicherraum bei gleichzeitiger Erhöhung der Durchsatzleistung bzw. der Produktionsgeschwindigkeit der Blasformmaschine ermöglicht wird. Dabei sollen die Bauhöhe und die Durchmesserabmessungen möglichst klein bleiben.

Diese Aufgabe wird erfindungsgemäß dadurch gelöst, daß zwei Verteilerorgane in einem Ringspalt etwa mittig in dem Ausstoßkolben gegenüberliegend innenseitig auf der inneren Oberfläche einer äußeren Zylinderhülse und außenseitig auf der äußeren Oberfläche einer inneren Zylinderhülse ausgebildet sind, wobei das umfangsverteilte Kunststoffmaterial beider Verteilerorgane am unteren Ende des des Ringspaltes aus dem Ausstoßkolben austritt.

Zweckmäßige Weiterbildungen der Erfindung sind Gegenstand der abhängigen Ansprüche.

Durch diese vorteilhafte Konstruktion kann ein Extrusionskopf mit geringstem Durchmesser und kurzer Bauhöhe bei großen Durchsatzleistungen realisiert werden.

In Ausgestaltung der Erfindung ist vorgesehen, daß etwa mittig innerhalb des Ringspaltes eine vergleichsweise dünne zylinderförmige Trennhülse angeordnet ist, wodurch die beiden Verteilerorgane zwar funktionell getrennt sind, aber räumlich doch sehr dicht bzw. koaxial nahe nebeneinander liegen, so daß die beiden umfangsverteilten Kunststoffströme auf nahezu gleichem Durchmesser - bei gleichen rheologischen Fließbedingungen - am unteren Ende des Ringspaltes aus dem Ausstoßkolben in den Speicherraum austreten.

In weiterer vorteilhafter Ausgestaltung sind die Verteilerorgane als auf der Außenwandung des inneren Rohrstückes und auf der Innenwandung des äußeren Rohrstückes angeordnete zylinderförmige Wendelkanalverteiler ausgebildet.
Dabei weisen die Wendelkanalverteiler jeweils wenigstens vier oder mehr gleichmäßig über den Umfang verteilte Wendelkanäle auf, wobei mit zunehmender Länge der Wendelkanäle die Tiefe der Wendelkanäle in Fließrichtung stetig immer mehr abnimmt, und die Wendelkanäle oben im Ausstoßkolben einzeln mit schmelzflüssiger Kunststoff-Schmelze eingespeist werden.

Die besonderen Ausführungen des erfindungsgemäßen Extrusionskopfes mit zylinderförmigen Umfangsverteilern weisen folgende Merkmale und Vorteile auf :
- die auf der Außen- und Innenwandung der beiden Rohrstücke angeordneten Verteilerorgane können jeweils als Ringkanal-, Kleiderbügel-, Herzkurven-, Wendelkanalverteiler oder als geeignete Kombination daraus ausgebildet sein,
- die Verteilerorgane sind innerhalb des aus wenigstens zwei konzentrischen Rohrstücken bestehenden, axial verschiebbaren Ausstoßkolbens angeordnet,
- bei einer Ausgestaltung als Wendelkanalverteiler weist jeder einzelne Verteiler jeweils wenigstens vier oder mehr nebeneinander gleichmäßig über den Umfang verteilte, voneinander beabstandete Wendelkanäle auf,
- mit zunehmender Länge der Wendelkanäle nimmt die Tiefe der Wendelkanäle in Fließrichtung stetig immer mehr ab,
- die einzelnen Wendelkanäle eines jeden Verteilers werden von oben einzeln bzw. separat innerhalb des Ausstoßkolbens mit Teilströmen von schmelzflüssiger Kunststoff-Schmelze aus dem Hauptschmelzestrom der angeschlossenen Extruder versorgt bzw. eingespeist,
- für alle Kunststoffpartikel in den jeweiligen Kunststoff-Teilströmen der beiden zylinderförmigen Umfangsverteiler ist die größtmöglich erzielbare Gleichheit der rheologischen Fließbedingungen geschaffen, um den sich nachteilig auswirkenden Memoryeffekt der Kunststoffmaterialien auszuschalten bzw. zu vergleichmäßigen,
- durch die in den Speicherraum ragende verlängerte Trennhülse zwischen den Verteilerorganen findet eine gegenseitige nachteilige Beeinflussung der beiden Schmelzeströme nicht statt,
- mit dem Verdrängungskörper am unteren freien Ende der Trennhülse wird in der untersten Position des Ausstoßkolbens bei Material- oder/und Farbwechsel in kürzester Zeit eine gezielte Materialführung mit vollständiger Ausspülung von Randmaterial erreicht.

Die Erfindung wird nachfolgend anhand von schematischen Zeichnungsdarstellungen näher erläutert und beschrieben. Es zeigen :
- Figur 1: einen erfindungsgemäßen Extrusionskopf in Längsschnittdarstellung,
- Figur 2: eine abgewandelte Ausführungsform in Teilschnittdarstellung und
- Figur 3: eine andere abgewandelte Ausführungsform in Teilschnittdarstellung

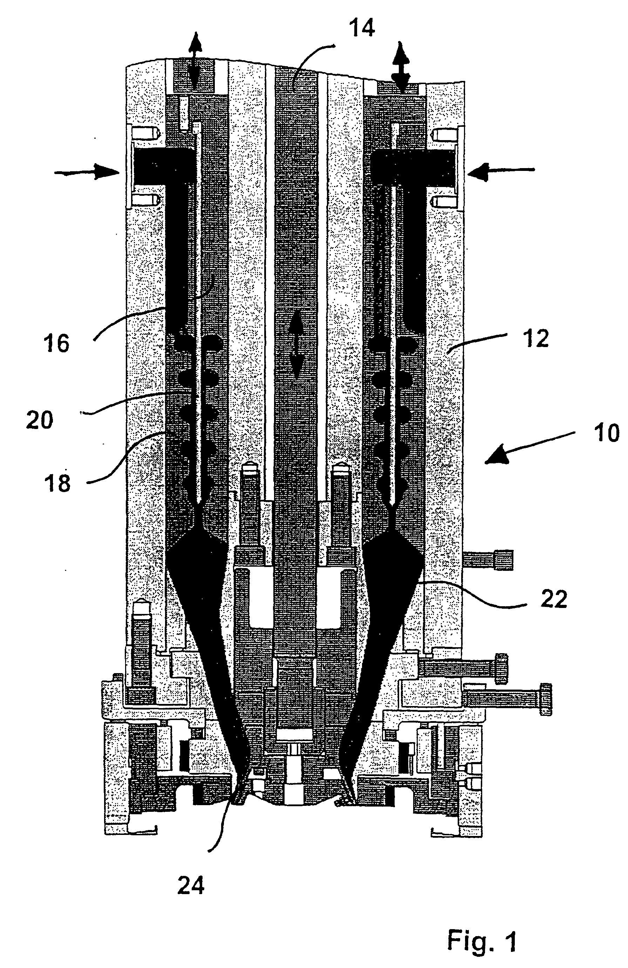

In Figur 1 ist mit der Bezugsziffer 10 ein Extrusionskopf (= Speicherkopf) mit einem im Gehäuse 12 axial verschiebbaren Ausstoßkolben für einen diskontinuierlichen Betrieb bezeichnet.
In dem Gehäuse 12 des Extrusionskopfes 10 ist eine zentrale Pinole 14 von dem verschiebbaren Ausstoßkolben umschlossen. Die Pinole 14 ist zur Einstellung der Spaltbreite der unteren Austrittsdüse 24 ebenfalls axial verschiebbar gelagert.
Die zu verarbeitenden schmelzfließenden Kunststoffmaterialströme werden oben seitlich (siehe Pfeile) von den nicht weiter dargestellten Extrudern kommend in das Gehäuse 12 eingefördert.

Der Ausstoßkolben besteht in diesem Ausführungsbeispiel aus zwei konzentrischen Rohrstücken 16 und 18. Über jeweils eine Längsnut - zum Ausgleich des Kolbenhubweges - gelangen die Kunststoffmaterialströme in den Ausstoßkolben.

Auf der äußeren Oberfläche des inneren Rohrstückes 16 und auf der inneren Oberfläche des äußeren Rohrstückes 18 ist jeweils ein Wendelkanalverteiler zur Umfangsverteitung der eingespeisten Kunststoffschmelzen ausgebildet. Die Wendelkanalverteiler weisen jeweils wenigstens vier oder mehr gleichmäßig über den Umfang verteilte Wendelkanäle auf. Mit zunehmender Länge der Wendelkanäle nimmt die Tiefe der Wendelkanäle in Fließrichtung stetig immer mehr ab, wobei die Wendelkanäle oben im Ausstoßkolben einzeln mit schmelzflüssiger Kunststoff-Schmelze versorgt werden.

Zur Verhinderung von Schlauchdrehungen des ausgedrückten schlauchförmigen Vorformlinges ist es sehr wichtig, daß die Wendeln der beiden Wendelkanalverteiler gegenläufig zueinander ausgebildet sind.
In dem zwischen den beiden Rohrstücken 16, 18 bzw. zwischen den beiden Wendelkanalverteilern gebildeten Spalt ist eine vergleichsweise dünne zylindrische Trennhülse 20 eingesetzt, die die beiden umfangsverteilten Schmelzeströme innerhalb des Ausstoßkolbens voneinander trennt. Am Ende der Trennhülse 20 verreinigen sich die beiden Schmelzeströme und bilden einen zweischichtigen Strang in dem unterhalb des Ausstoßkolbens angeordneten Speicherraum 22 des Extrusionskopfes 10. In dem vergleichsweise breiten Speicherraum 22 findet durch die Ruhephase des Kunststoffmateriales (diskontinuierlicher Betrieb) eine Entspannung und ein innerer Spannungsabbau im Kunststoffmaterial statt, wodurch die nachteilige Auswirkung des Memoryeffektes (Quellbestreben wieder die vorherige Form zu erlangen) des Kunststoffmateriales erheblich vermindert wird. Unten an den Speicherraum 22 schließt sich die einstellbare Austrittsdüse 24 an, durch die das Kunststoffmaterial als schlauchförmiger Vorformling zwischen die geöffneten Blasformhälften einer Blasformmaschine ausgedrückt wird.

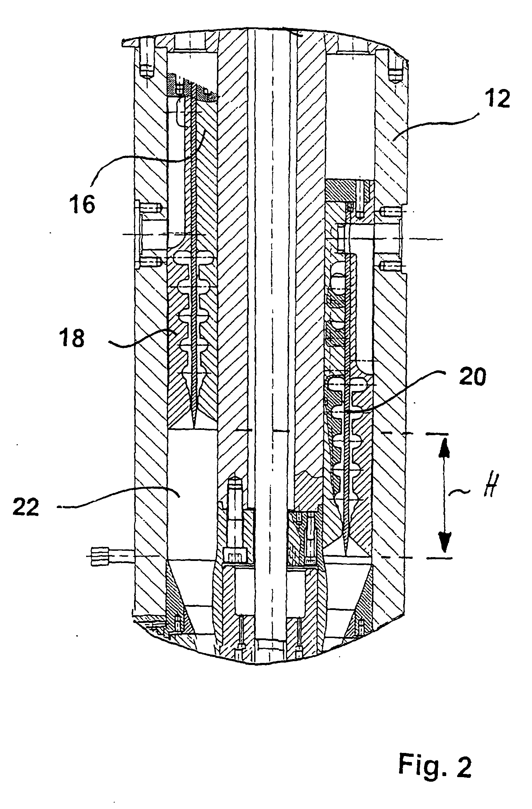

In Figur 2 ist in der linken Bildhäffte der Ausstoßkolben in seiner obersten Position und in der rechten Bildhälfte in seiner untersten Position dargestellt. Mit H ist die Länge des Kolbenhubs gekennzeichnet. In dieser Darstellung ist die Trennhülse 20 verlängert ausgebildet und ragt durch den vorderen Spalt des Ausstoßkolbens hindurch um ein kleines Stück bis in den Speicherraum hinein. Eine Vereinigung der beiden Kunststoffströme findet erst im Speicherraum statt. Dies ist insbesondere dann wichtig, wenn zwei verschiedene Materialien mit unterschiedlichen Viskositäten bzw. unterschiedlichem Schmelz-Index (MFI) verarbeitet werden, damit keine nachteilige gegenseitige Beeinflussung noch während der Umfangsverteilung stattfinden kann. Das zähfließende Material würde das dünnfließende Material verdrängen. Dies könnte beispielsweise auftreten, wenn innenseitig ein spannungsrißbeständiges A-Material (z. B. Lupolen 4261 A) mit hoher Beständigkeit gegen agressive chemikalische Flüssigkeiten wie z. B. Peressigsäure und außenseitig ein steifes Z-Material (z. B. Lupolen 5261 Z) mit hohen Festigkeitswerten in einem zweischichtigen Strang zu hochwertigen L-Ringfässern verarbeitet wird. Auch mit solch problematischem Materialien wird eine völlige konzentrisch gleiche Materialverteilung in den zwei Schichten im Schlauch bzw. im fertigen Produkt erzielt, im Gegensatz wie z. B. bei einem herkömmlichen Doppel-Herzkurven-Verteiler.
Die Trennhülse 20 weist beispielsweise bei einem 25 Liter Speicherkopf einen mittleren Durchmesser von ca. 315 mm und eine Wandstärke (Dicke) von 10 mm auf.

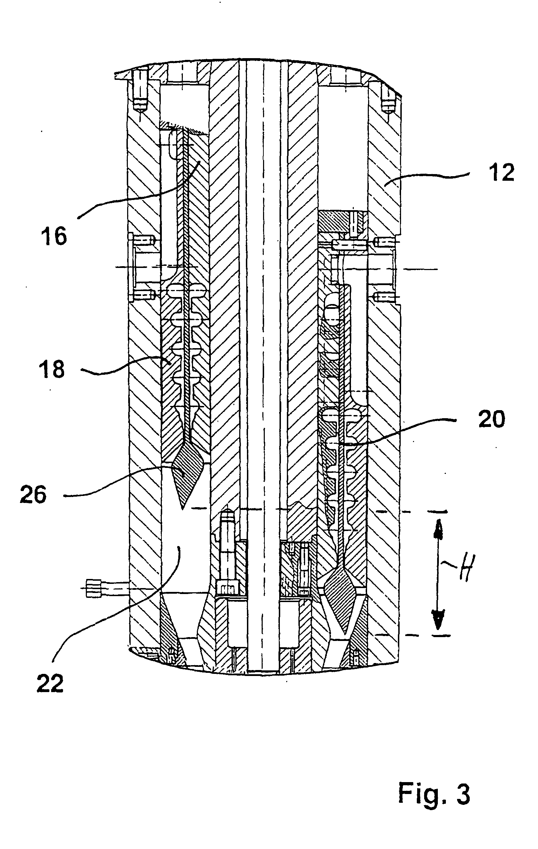

In Figur 3 ist eine weitere abgewandelte Ausführungsform des erfindungsgemäßen Extrusionskopfes 10 gezeigt. Hierbei ist am freien unteren Ende der Trennhülse 20 ein Verdrängungskörper 26 ausgebildet und angeordnet, der unterhalb des Ausstoßkolbens in den Speicherraum 22 hineinragt. Dabei ist der Verdrängungskörper 26 an die Kontur des unteren Endes des Ausstoßkolbens und-des Bereiches des unteren konisch zulaufenden Speicherraumes (22) angepaßt und weist eine rautenförmige oder zwiebelförmige Gestalt auf. Durch diese konstruktiv einfache Maßnahme wird erreicht, daß in der untersten Position des Ausstoßkolbens bei Material- oder/und Farbwechsel des eingesetzten Kunststoffmaterials zur Herstellung eines anderen Kunststoff-Hohlkörpers in kürzester Zeit durch gezielte Materialführung in den Randbereichen des unteren Speicherraumes eine vollständige Ausspülung des zuvor verwendeten Materials erreicht wird.

Der erfindungsgemäße Extrusionskopf kann in vorteilhafter Weise bei vorhandenen Blasformmaschinen durch einfachen Austausch an die Stelle eines herkömmlichen Speicherkopfes gesetzt werden. Auf diese Weise kann mit verhältnismäßig geringen Investitionskosten eine wirksame Leistungssteigerung der Blasformmaschine erreicht werden.
Ein wesentlicher Vorteil des erfindungsgemäßen Extrusionskopfes besteht weiterhin darin, daß die eingesetzten Hülsen austauschbar und bezüglich Länge und Form an das hauptsächlich zu verarbeitende Material angepaßt werden können, um beste Verarbeitungsergebnisse und höchste Stückzahlen zu erzielen.

### Bezugsziffernliste

- **10**: Extrusionskopf = Speicherkopf
- **12**: Gehäuse
- **14**: zentrale Pinole
- **16**: inneres Rohrstück
- **18**: äußeres Rohrstück
- **20**: Trennhülse
- **22**: Speicherraum
- **24**: Austrittsdüse
- **26**: Verdrängungskörper
- **H**: Kolbenhub

## Patentansprüche

1. Extrusionskopf für eine Blasformmaschine zur Herstellung von mehrschichtigen Kunststoff-Hohlkörpern mit einem oder mehreren an das Speicherkopfgehäuse (12) angeschlossenen Extrudem zur Einspeisung von schmelzflüssiger Kunsttoff-Schmelze in den Speicherkopf (10), mit einer zentral angeordneten Pinole (14) und wenigstens einem, die Pinole (14) konzentrisch umschließenden Verteilerorgan zur Umfangsverteilung der Kunststoffschmelze(n) und Zuführung in einen ringförmigen Speicherraum (22), an den sich eine ringförmige Austrittsdüse (24) anschließt, durch den die Kunststoff-Schmelze mittels eines axial verschiebbaren Ausstoßkolbens ausdrückbar ist,
**dadurch gekennzeichnet, daß**
zwei Verteilerorgane in einem Ringspalt etwa mittig in dem Ausstoßkolben gegenüberliegend innenseitig auf der inneren Oberfläche einer äußeren Zylinderhülse (18) und außenseitig auf der äußeren Oberfläche einer inneren Zylinderhülse (16) ausgebildet sind, wobei das umfangsverteilte Kunststoffmaterial beider Verteilerorgane am unteren Ende des Ringspaltes aus dem Ausstoßkolben austritt.

2. Extrusionskopf nach Anspruch 1,
**dadurch gekennzeichnet , daß**
innerhalb des Ringspaltes etwa mittig eine vergleichsweise dünne zylinderförmige Trennhülse (20) angeordnet ist, wodurch die beiden Verteilerorgane zwar funktionell getrennt sind, aber räumlich doch sehr dicht bzw. koaxial nahe nebeneinander liegen, so daß die beiden umfangsverteilten Kunststoffströme auf nahezu gleichem Durchmesser am unteren Ende des Ringspaltes aus dem Ausstoßkolben in den Speicherraum (22) austreten.

3. Extrusionskopf nach Anspruch 1 oder 2,
**dadurch gekennzeichnet, daß**
die Trennhülse (20) um ein Stück über das Ende des Ausstoßkolbens hinaus verlängert ausgebildet ist und bis in den darunterliegenden Speicherraum (22) hinein ragt.

4. Extrusionskopf nach Anspruch 1, 2 oder 3,
**dadurch gekennzeichnet, daß**
am freien unteren Ende der Trennhülse (20) ein Verdrängungskörper (26) ausgebildet und angeordnet ist, der unterhalb des Ausstoßkolbens in den Speicherraum (22) hineinragt.

5. Extrusionskopf nach Anspruch 1, 2, 3 oder 4,
**dadurch gekennzeichnet, daß**
der Verdrängungskörper (26) in Anpassung an die Kontur des unteren Endes des Ausstoßkolbens und des Bereiches des unteren konisch zulaufenden Speicherraumes (22) eine rautenförmige oder zwiebelförmige Gestalt aufweist.

6. Extrusionskopf nach Anspruch 1, 2, 3, 4 oder 5,
**dadurch gekennzeichnet, daß**
die Verteilerorgane als auf der Außenwandung des inneren Rohrstückes (16) und auf der Innenwandung des äußeren Rohrstückes (18) angeordnete zylinderförmige Wendelkanalverteiler ausgebildet sind.

7. Extrusionskopf nach Anspruch 6,
**dadurch gekennzeichnet, daß**
die Wendelkanalverteiler jeweils wenigstens zwei oder mehr gleichmäßig über den Umfang verteilte Wendelkanäle aufweisen und mit zunehmender Länge der Wendelkanäle die Tiefe der Wendelkanäle in Fließrichtung stetig immer mehr abnimmt, wobei die Wendelkanäle oben einzeln mit schmelzflüssiger Kunststoff-Schmelze eingespeist werden.

8. Extrusionskopf nach Anspruch 6 oder 7,
**dadurch gekennzeichnet, daß**
die Wendeln der beiden Wendelkanalverteiler gegenläufig zueinander ausgebildet sind.

## Claims

1. An extrusion head for a blow-moulding machine for producing multiple-layer hollow bodies of plastics material with one or more extruders attached to the storage-head housing (12) for feeding molten plastics-material melt into the storage head (10), having a centrally arranged spindle (14) and at least one distributor member surrounding the spindle (14) concentrically for the peripheral distribution of the plastics-material melt or melts and for conveying it into an annular storage chamber (22) adjoined by an annular outlet nozzle (24) through which the plastics-material melt is extrudable by means of an axially displaceable expulsion piston, **characterized in that** two distributor members are formed in an annular gap substantially centrally in the expulsion piston in an opposed manner on the inside on the inner surface of an outer cylinder bush (18) and on the outside on the outer surface of an inner cylinder bush (16), wherein the plastics material - distributed over the periphery - of the two distributor members emerges from the expulsion piston at the lower end of the annular gap.

2. An extrusion head according to Claim 1, **characterized in that** a comparatively thin cylindrical separating bush (20) is arranged substantially centrally inside the annular gap, as a result of which, although the two distributor members are separate in terms of their function, they are situated very closely or coaxially near to each other spatially, so that the two flows of plastics material distributed over the periphery emerge from the expulsion piston into the storage chamber (22) at substantially the same diameter at the lower end of the annular gap.

3. An extrusion head according to Claim 1 or 2, **characterized in that** the separating bush (20) is extended by an amount beyond the end of the expulsion piston and projects into the storage chamber (22) situated thereunder.

4. An extrusion head according to Claim 1, 2 or 3, **characterized in that** a displacement member (26), which projects into the storage chamber (22) below the expulsion piston, is formed and situated at the free lower end of the separating bush (20).

5. An extrusion head according to Claim 1, 2, 3 or 4, **characterized in that** the displacement member (26) has a rhomboidal or onion shape so as to adapt to the contour of the lower end of the expulsion piston and of the region of the lower storage chamber (22) tapering inwards in a conical manner.

6. An extrusion head according to Claim 1, 2, 3, 4 or 5, **characterized in that** the distributor members are designed in the form of cylindrical helical-duct distributors arranged on the outer wall of the inner tube member (16) and on the inner wall of the outer tube member (18).

7. An extrusion head according to Claim 6, **characterized in that** the helical-duct distributors each comprise at least two or more helical ducts uniformly distributed over the periphery, and the depth of the helical ducts decreases to a constantly increasing degree in the flow direction as the length of the helical ducts increases, wherein the helical ducts are fed individually with molten plastics-material melt at the top.

8. An extrusion head according to Claim 6 or 7, **characterized in that** the helices of the two helical-duct distributors run in opposite directions to each other.

## Revendications

1. Tête d'extrusion pour machine de moulage par soufflage pour la fabrication de corps creux en matière synthétique à plusieurs couches, qui comprend, d'une part, une ou plusieurs extrudeuses raccordées au boîtier (12) de la tête accumulatrice pour alimenter la tête accumulatrice (10) par de la matière synthétique en fusion, et, d'autre part, une pièce centrale (14) entourée par au moins un organe distributeur pour répartir la/les coulée(s) de matière synthétique en direction périphérique et pour acheminer ladite matière vers un réservoir annulaire (22) prolongé par une buse annulaire de sortie (24) à travers laquelle la coulée de matière synthétique peut être expulsée grâce à un piston d'expulsion déplaçable axialement, **caractérisée par** deux organes distributeurs qui sont disposés en se faisant face dans une fente annulaire, sensiblement au centre du piston d'expulsion, l'un desdits organes distributeurs étant ménagé dans la paroi intérieure d'une douille cylindrique extérieure (18), l'autre dans la paroi extérieure d'une douille cylindrique intérieure (16), étant précisé que la matière synthétique répartie sur la périphérie des deux organes distributeurs sort du piston d'expulsion par l'extrémité inférieure de la fente annulaire.

2. Tête d'extrusion selon la revendication 1, **caractérisée par** une douille de séparation (20) cylindrique à paroi relativement mince, disposée sensiblement au milieu de la fente annulaire de sorte que les deux organes distributeurs coaxiaux, tout en étant séparés l'un de l'autre d'un point de vue fonctionnel, sont cependant très proches l'un de l'autre, de sorte que les deux flux de matières synthétiques répartis sur la périphérie sortent du piston d'expulsion quasiment sur le même diamètre par l'extrémité inférieure de la fente annulaire pour entrer dans le réservoir (22).

3. Tête d'extrusion selon les revendications 1 ou 2 **caractérisée en ce que** la douille de séparation (20) est saillante sur l'extrémité du piston d'expulsion et s'étend jusque dans le réservoir (22) disposé en dessous dudit piston.

4. Tête d'extrusion selon les revendications 1, 2 ou 3 **caractérisée en ce que** l'extrémité inférieure de la douille de séparation (20) comporte un corps de refoulement (26) qui est saillant sur l'extrémité inférieure du piston d'expulsion pour s'étendre jusque dans le réservoir (22).

5. Tête d'extrusion selon les revendications 1, 2, 3 ou 4 **caractérisée en ce que** le corps de refoulement (26) présente une forme de losange ou d'oignon s'adaptant au contour de l'extrémité inférieure du piston d'expulsion et de la zone du réservoir (22) se resserrant sous forme conique.

6. Tête d'expulsion selon les revendications 1, 2, 3, 4 ou 5 **caractérisée en ce que** les organes distributeurs sont constitués d'éléments distributeurs à conduits hélicoïdaux formés dans la paroi extérieure de la douille cylindrique intérieure (16) et dans la paroi intérieure de la douille cylindrique extérieure (18).

7. Tête d'expulsion selon la revendication 6 **caractérisée en ce que** les éléments distributeurs comportent au moins deux conduits hélicoïdaux répartis régulièrement sur la périphérie, dont la profondeur diminue progressivement en direction de l'écoulement de la matière synthétique et qui peuvent être alimentés individuellement à partir du haut avec de la matière synthétique en fusion.

8. Tête d'expulsion selon les revendications 6 ou 7 **caractérisée en ce que** les conduits hélicoïdaux sont orientés en sens opposé les uns par rapport à l'autres.
